# EUROPEAN PATENT SPECIFICATION

(11) **EP 3 474 493 B1**
(45) Date of publication and mention of the grant of the patent: **20.10.2021**
(21) Application number: 16923549.6
(22) Date of filing: 06.12.2016
(51) Int. Cl.: H04L 12/26, H04L 12/703

(54) **NETWORK PERFORMANCE MEASUREMENT METHOD AND DETECTION DEVICE**
VERFAHREN UND VORRICHTUNG ZUR MESSUNG DER NETZWERKLEISTUNG
PROCÉDÉ DE MESURE DE PERFORMANCES DE RÉSEAU ET DISPOSITIF DE DÉTECTION

(43) Date of publication of application: 24.04.2019
(73) Proprietor: Huawei Technologies Co., Ltd., Longgang District Shenzhen, Guangdong 518129 (CN)
(72) Inventor: LIU, Xinchao, Shenzhen Guangdong 518129 (CN); WANG, Yufei, Shenzhen Guangdong 518129 (CN); CAI, Hongjian, Shenzhen Guangdong 518129 (CN); ZHANG, Lvchuan, Shenzhen Guangdong 518129 (CN)
(74) Representative: Körber, Martin Hans
(86) International application number: PCT/CN2016/108733
(87) International publication number: WO 2018/102992

(56) References cited:
- EP-A1- 2 536 066
- WO-A1-2012/083611
- WO-A1-2016/091311
- CN-A- 101 945 018
- CN-A- 102 035 694
- CN-A- 104 780 095
- US-A1- 2011 158 105
- US-A1- 2015 023 186

## Description

### TECHNICAL FIELD

This application relates to the field of communications technologies, and in particular, to a network performance measurement method and a probing device.

### BACKGROUND

With fast development of an IP network, a growing quantity of video, voice, game, and other services emerge. In addition, users pose an increasingly high experience requirement for service awareness. Therefore, operators also have an increasingly high requirement for IP network performance. Performance indicators such as a network delay and a packet loss affect performance of a user service and an application. Therefore, an effective network performance monitoring method is required to detect a performance indicator of each link in the network, so as to further optimize the network based on the performance indicator.

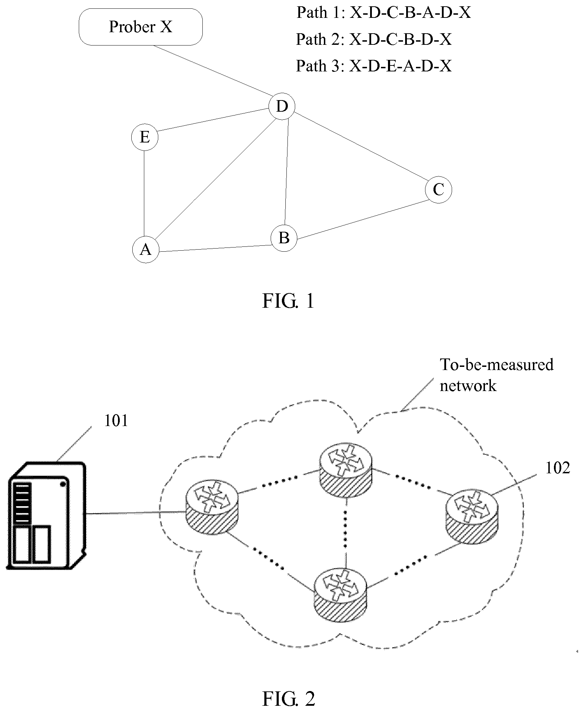

At present, there is a network performance monitoring method based on the Resource Reservation Protocol-Traffic Engineering (resource reservation protocol-traffic engineering, RSVP-TE for short). In the method, a large quantity of overlay paths are generated to cover links of the entire network, a probe packet is proactively sent to monitor indicators such as a packet loss rate and a delay of the overlay paths, and calculation is performed according to the indicators obtained by means of monitoring, to obtain a performance indicator of each link. For example, in a network topology shown in FIG 1, three paths are generated based on the foregoing method; and a packet loss rate obtained by means of probing on a path 1 is X, and no packet loss occurs on both a path 2 and a path 3. Therefore, it can be determined that a link on which a packet loss occurs is a link from B to A, and a packet loss rate is X.

In the foregoing method, to detect a performance indicator of a link, multiple overlay paths are required, and a specified quantity of packets are sent on each overlay path. In addition, parameter information of the packets on each overlay path is monitored, and then the performance indicator of the link is obtained by means of operation according to the parameter information. Therefore, a process of measuring the performance indicator of the link is relatively complex. When the network topology includes many nodes and features a relatively complex structure, difficulty of measuring a network performance indicator is further increased, and measurement efficiency is relatively low. US 2011/158105 A1 discloses a method and apparatus for detecting and localizing an anomaly for a network.

### SUMMARY

The present invention is defined in the appended independent claims to which reference should be made. Advantageous features are set out in the appended dependent claims.

To achieve the preceding objectives, the embodiments of this application use the following technical solutions:

According to a first aspect, a network performance measurement method is provided. The method includes: determining, by a probing device, a node in a to-be-measured network as a support node; selecting a first to-be-probed node from at least one adjacent node of the support node; generating, according to the support node and the first to-be-probed node, two detection paths including a first detection path and a second detection path, where the first detection path includes a path between the probing device and the support node, the second detection path includes the first detection path and a first to-be-measured link, and the first to-be-measured link is a link between the support node and the first to-be-probed node; sending a detection packet on each detection path of the two detection paths, and detecting parameter information of each detection path, where the detection packet of each detection path of the two detection paths comprises path information of the detection; and determining, according to parameter information of the first detection path and parameter information of the second detection path, link performance of the first to-be-measured link included in the to-be-measured network; where the to-be-measured network includes multiple to-be-probed nodes, and quantities of hops from the multiple to-be-probed nodes to the probing device are different, wherein the method further comprises: successively detecting, by the probing device, according to an ascending order of the quantities of hops, link performance of each to-be-measured link included in the to-be-measured network. In the foregoing technical solution, after determining the support node and the first to-be-probed node, the probing device may generate the two detection paths according to the support node and the first to-be-probed node, and detect path information of each detection path of the two detection paths; and determine the link performance of the first to-be-measured link according to the parameter information of the first detection path and the parameter information of the second detection path. Therefore, when performance detection is performed on each to-be-measured link included in the to-be-measured network, only two detection paths need to be detected, thereby reducing difficulty of network performance detection and improving detection efficiency. The probing device may add path information of each detection path to a detection packet of the detection path. Therefore, each node in the to-be-measured network does not need to locally store the path information of each detection path, thereby saving a storage capacity of each node.

In a possible implementation of the first aspect, a quantity of hops from the at least one adjacent node of the support node to the probing device is greater than or equal to a quantity of hops from the support node to the probing device. In the possible implementation, the probing device may generate a detection path hop by hop according to a quantity of hops from a to-be-probed node included in the to-be-measured network to the probing device, so as to implement performance measurement on each to-be-measured link in the to-be-measured network.

In a possible implementation of the first aspect, after the determining, according to parameter information of the first detection path and parameter information of the second detection path, link performance of the first to-be-measured link included in the to-be-measured network, the method further includes: selecting a second to-be-probed node from at least one adjacent node of the first to-be-probed node, where a quantity of hops from the second to-be-probed node to the probing device is greater than or equal to a quantity of hops from the first to-be-probed node to the probing device; generating a third detection path according to the first to-be-probed node and the second to-be-probed node, where the third detection path includes the second detection path and a second to-be-measured link, and the second to-be-measured link is a link between the first to-be-probed node and the second to-be-probed node; sending a detection packet on the third detection path, and detecting parameter information of the third detection path; and determining link performance of the second to-be-measured link according to the parameter information of the second detection path and the parameter information of the third detection path. In the possible implementation, the probing device detects the to-be-measured network according to an ascending order of quantities of hops from to-be-probed nodes to the probing device. Therefore, for each to-be-measured link, the probing device may detect parameter information of only one detection path, and determine link performance of the to-be-measured link with reference to parameter information that is previously obtained by means of detection and that is of a previous-hop detection path. This reduces a quantity of detections, and further improves network performance detection efficiency.

In a possible implementation of the first aspect, if at least two probing devices exist, before the determining, by a probing device, a support node, the method further includes: receiving detection indication information sent by at least one probing device, where the detection indication information is used to instruct the probing device to detect network performance of the to-be-measured network according to the support node, and the at least one probing device is a probing device, other than the probing device, of the at least two probing devices.

In a possible implementation of the first aspect, after the determining, according to parameter information of the first detection path and parameter information of the second detection path, link performance of the first to-be-measured link included in the to-be-measured network, the method further includes: sending the link performance of the first to-be-measured link to another probing device, other than the probing device, of the at least two probing devices. For link performance of a to-be-measured link, each probing device may use a latest obtained detection value, a detection value that occurs most frequently, or an average value of multiple detection values as the link performance of the to-be-measured link.

In the foregoing two possible implementations, when the at least two probing device exist, the probing device may detect the to-be-measured network when receiving the detection indication information sent by the at least one probing device, so as to measure link performance of a to-be-measured link in a targeted manner, and further improve measurement efficiency of the to-be-measured link when the at least two probing devices detect each link in the to-be-measured network.

In a possible implementation of the first aspect, before the determining, according to parameter information of the first detection path and parameter information of the second detection path, link performance of the first to-be-measured link included in the to-be-measured network, the method further includes: determining whether the to-be-measured network satisfies a detection end condition, where the detection end condition is one of the following: each to-be-measured link in the to-be-measured network has been detected, a detection time of the to-be-measured network satisfies a preset time, or a quantity of detections on the first to-be-measured link included in the to-be-measured network satisfies a preset detection quantity; and correspondingly, the determining, according to parameter information of the first detection path and parameter information of the second detection path, link performance of the first to-be-measured link included in the to-be-measured network includes: if determining that the detection end condition is satisfied, determining, according to the parameter information of the first detection path and the parameter information of the second detection path, the link performance of the first to-be-measured link included in the to-be-measured network. In the possible implementation, when determining that the to-be-measured network satisfies the preset condition, the probing device may determine, according to the parameter information of the first detection path and the parameter information of the second detection path, the link performance of the first to-be-measured link included in the to-be-measured network, so as to determine the link performance of the first to-be-measured link according to parameter information of multiple detections. This further improves accuracy of measured link performance.

According to a second aspect, a probing device is provided. The probing device includes: a determining unit, configured to determine a support node, where the support node is a node in a to-be-measured network; a selection unit, configured to select a first to-be-probed node from at least one adjacent node of the support node; a generation unit, configured to generate two detection paths according to the support node and the first to-be-probed node, where the two detection paths include a first detection path and a second detection path, the first detection path includes a path between the probing device and the support node, the second detection path includes the first detection path and a first to-be-measured link, and the first to-be-measured link is a link between the support node and the first to-be-probed node; a sending unit, configured to send a detection packet on each detection path of the two detection paths, where the detection packet of each detection path of the two detection paths comprises path information of the detection path; and a detection unit, configured to detect parameter information of each detection path, where the determining unit is further configured to determine, according to parameter information of the first detection path and parameter information of the second detection path, link performance of the first to-be-measured link included in the to-be-measured network; where the to-be-measured network includes multiple to-be-probed nodes, and quantities of hops from the multiple to-be-probed nodes to the probing device are different, wherein the detection unit (305) is further configured to: successively detect, according to an ascending order of the quantities of hops, link performance of each to-be-measured link included in the to-be-measured network.

In a possible implementation of the second aspect, a quantity of hops from the at least one adjacent node of the support node to the probing device is greater than or equal to a quantity of hops from the support node to the probing device.

In a possible implementation of the second aspect, the selection unit is further configured to select a second to-be-probed node from at least one adjacent node of the first to-be-probed node, where a quantity of hops from the second to-be-probed node to the probing device is greater than or equal to a quantity of hops from the first to-be-probed node to the probing device; the generation unit is further configured to generate a third detection path according to the first to-be-probed node and the second to-be-probed node, where the third detection path includes the second detection path and a second to-be-measured link, and the second to-be-measured link is a link between the first to-be-probed node and the second to-be-probed node; the sending unit is further configured to send a detection packet on the third detection path, and detect parameter information of the third detection path; and the determining unit is further configured to determine link performance of the second to-be-measured link according to the parameter information of the second detection path and the parameter information of the third detection path.

In a possible implementation of the second aspect, the probing device further includes: a receiving unit, configured to receive detection indication information sent by at least one probing device, where the detection indication information is used to instruct the probing device to detect network performance of the to-be-measured network according to the support node, and the at least one probing device is a probing device, other than the probing device, of the at least two probing devices.

In a possible implementation of the second aspect, the sending unit is further configured to send the link performance of the first to-be-measured link to another probing device, other than the probing device, of the at least two probing devices.

In a possible implementation of the second aspect, the probing device further includes: a judging unit, configured to determine whether the to-be-measured network satisfies a detection end condition, where the detection end condition is one of the following: each to-be-measured link in the to-be-measured network has been detected, a detection time of the to-be-measured network satisfies a preset time, or a quantity of detections on each to-be-measured link included in the to-be-measured network satisfies a preset detection quantity; and the determining unit is specifically configured to: if it is determined that the detection end condition is satisfied, determine, according to the parameter information of the first detection path and the parameter information of the second detection path, the link performance of the first to-be-measured link included in the to-be-measured network.

According to a third aspect, a computer-readable storage medium is provided. The computer-readable storage medium stores a computer-executable instruction. When at least one processor of a device executes the computer-executable instruction, the device executes the network performance measurement method provided in the first aspect or any possible implementation of the first aspect.

According to a fourth aspect, a computer program product is provided. The computer program product includes a computer-executable instruction, and the computer-executable instruction is stored in a computer-readable storage medium. At least one processor of a device may read the computer-executable instruction from the computer-readable storage medium, and the at least one processor executes the computer-executable instruction, so that the device implements the network performance measurement method provided in the first aspect or any possible implementation of the first aspect.

### BRIEF DESCRIPTION OF DRAWINGS

FIG. 1 is a schematic diagram of a type of network performance measurement;
FIG. 2 is a schematic structural diagram of a network performance measurement system according to an embodiment of this application;
FIG. 3 is a schematic structural diagram of a probing device according to an embodiment of this application;
FIG. 4 is a flowchart of a network performance measurement method according to an embodiment of this application;
FIG. 5 is a schematic diagram of a type of network performance measurement according to an embodiment of this application;
FIG. 6 is a flowchart of another network performance measurement method according to an embodiment of this application;
FIG. 7 is a flowchart of still another network performance measurement method according to an embodiment of this application;
FIG. 8 is a flowchart of another type of network performance measurement according to an embodiment of this application;
FIG. 9 is a schematic structural diagram of a probing device according to an embodiment of this application; and
FIG. 10 is a schematic structural diagram of another probing device according to an embodiment of this application.

### DESCRIPTION OF EMBODIMENTS

The following describes the technical solutions in the embodiments of this application with reference to the accompanying drawings in the embodiments of this application.

FIG. 2 is a schematic structural diagram of a network performance measurement system according to an embodiment of this application. Referring to FIG. 2, the measurement system includes a probing device 101 and a to-be-probed node 102. The probing device 101 is configured to control a network performance measurement process, and implement configuration of each to-be-probed node. The probing device 101 may be further configured to detect, collect, analyze, and store link performance of each link. The link performance may include indicator data such as a packet loss rate, a delay, a jitter, and disorder. For example, the probing device may detect, by sending a detection packet, a packet loss rate of a link according to quantities of sent and received detection packets. The probing device 101 may be a server or a dedicated device that has a packet sending capability, or may be used as a component of a to-be-probed node. A to-be-measured network may be the Internet, a telecommunications network, an IP proprietary network or a test network that is possessed by an enterprise, an individual, or a government department, or the like. The to-be-measured network may include multiple to-be-probed nodes. A connection relationship between the multiple to-be-probed nodes is determined by a structure of the to-be-measured network, and may be also referred to as a network topology of the to-be-measured network. The to-be-probed node 102 is a device in the to-be-measured network, and has a packet forwarding capability. For example, the to-be-probed node may be a router.

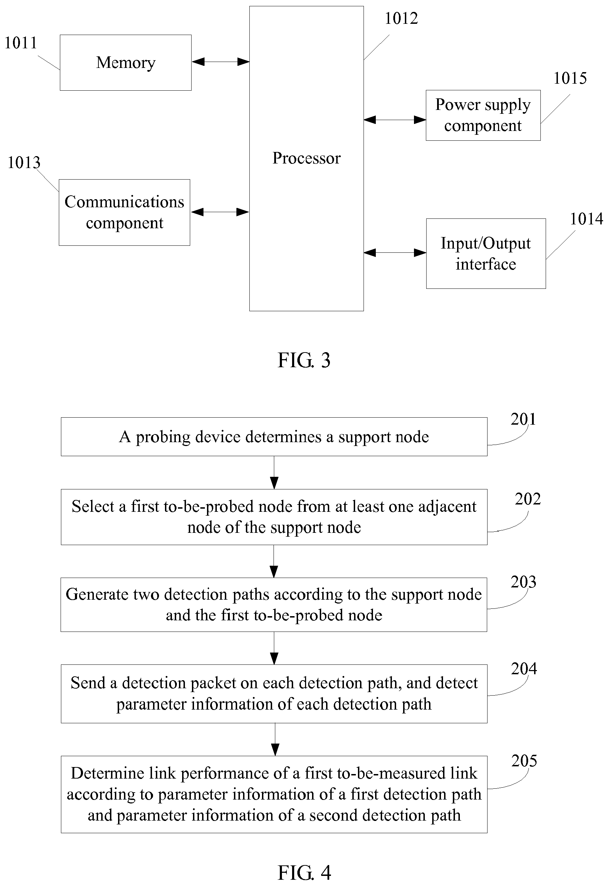

FIG. 3 is a schematic structural diagram of a probing device according to an embodiment of this application. An example in which the probing device is a server is used for description. The server may include a memory 1011, a processor 1012, a communications component 1013, an input/output interface 1014, a power supply component 1015, and the like. Persons skilled in the art may understand that a structure of the server shown in FIG. 3 does not constitute a limitation on the server, and may include more or fewer components than those shown in the figure, or combine some components, or have a different component deployment.

The memory 1011 may be configured to store a software program and a module, and may mainly include a program storage area and a data storage area. The program storage area may store an operating system, an application program required by at least one function, and the like. The data storage area may store data created according to use of the server, and the like. The processor 1012 is a control center of the server, connects to all components of the entire server by using all types of interfaces and lines, and implements, by running or executing the software program and/or the module stored in the memory 1011 and invoking data stored in the memory 1011, various functions of the server and data processing, so as to perform overall monitoring on the server. The communications component 1013 is configured to facilitate wired or wireless communication between the server and another device. The input/output interface 1014 provides an interface between the processor 1012 and a peripheral interface module. The peripheral interface module may be a keyboard, a click wheel, a button, or the like. The power supply component 1015 is configured to supply power to components of the server, and may include a power management system, one or more power supplies, and another component associated with power generation, management, and allocation for the server.

FIG. 4 is a flowchart of a network performance measurement method according to an embodiment of this application. Referring to FIG. 4, the method includes the following several steps.

Step 201. A probing device determines a support node, where the support node is a node in a to-be-measured network.

The to-be-measured network may be the Internet, a telecommunications network, an IP proprietary network or a test network that is possessed by an enterprise, an individual, or a government department, or the like. The to-be-measured network may include multiple to-be-probed nodes. The support node may be a node of the multiple to-be-probed nodes.

In addition, the probing device may be deployed independently, or may be deployed in combination with a node in the to-be-measured network. When the probing device is deployed independently, the probing device may be a server, or a dedicated device that has a packet forwarding capability. When the probing device is deployed in combination with the node in the to-be-measured network, the probing device may be used as a component of the support node, so that the support node has a network performance measurement function.

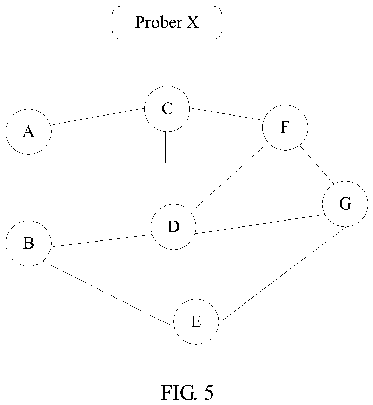

When the probing device is deployed independently, if the to-be-measured network is shown in FIG. 5 and a node C is used as the support node, a link between the probing device and the node C may also have performance indicators such as a packet loss and a delay. When the probing device measures link performance of a to-be-measured link C-A, C-D, or C-F, the probing device needs to measure link performance of X-C. However, when the probing device is deployed in combination with the support node C, if the probing device measures the link performance of the to-be-measured link C-A, C-D, or C-F, the probing device may directly measure the link performance of the to-be-measured link C-A, C-D, or C-F. In this embodiment of this application, an example in which the probing device is independently deployed is used for description.

Step 202. The probing device selects a first to-be-probed node from at least one adjacent node of the support node.

The at least one adjacent node includes one or more nodes. If the at least one adjacent node includes one node, the probing device directly determines the node as the first to-be-probed node. If the at least one adjacent node includes multiple nodes, the probing device may determine any one of the multiple adjacent nodes as the first to-be-probed node.

For example, in the to-be-measured network shown in FIG. 5, adjacent nodes of the support node C include a node A, a node D, and a node F. In this case, the probing device may select any node from the node A, the node D, and the node F, and determine the node as a to-be-probed node.

Further, when the at least one adjacent node includes multiple nodes, and the probing device selects the first to-be-probed node from the multiple nodes, the probing device may asynchronously use each of the multiple nodes as the first to-be-probed node according to a specified sequence, and generate, according to step 203, two detection paths corresponding to each node.

Step 203. Generate two detection paths according to the support node and the first to-be-probed node, where the two detection paths include a first detection path and a second detection path. The first detection path includes a path between the probing device and the support node. The second detection path includes the first detection path and a first to-be-measured link, and the first to-be-measured link is a link between the support node and the first to-be-probed node.

That the first detection path includes a path between the probing device and the support node means that the first detection path includes a first path from the probing device to the support node, and a reverse path of the first path. For example, in the to-be-measured network shown in FIG. 5, if the support node is C, the first detection path is X-C-X.

That the second detection path includes the first detection path and the to-be-measured link means that the second detection path includes the first path from the probing device to the support node, a path from the support node to the first to-be-probed node, a reverse path from the first to-be-probed node to the support node, and the reverse path of the first path. The first to-be-probed node may be any one of multiple adjacent nodes. Therefore, when the first to-be-probed node is different, the second detection path generated according to the first to-be-probed node is also different. For example, in the to-be-measured network shown in FIG. 5, if the first to-be-probed node is the node A, the second detection path is X-C-A-C-X; if the first to-be-probed node is the node D, the second detection path may be X-C-D-C-X.

Optionally, when the probing device generates two detection paths according to the support node and different first to-be-probed nodes, the probing device may simultaneously generate detection paths corresponding to the different first to-be-probed nodes, or may generate, one by one according to a specified sequence, the detection paths corresponding to the different first to-be-probed nodes. In the to-be-measured network, a detection path corresponding to the i^{th} hop of to-be-probed node includes a detection path corresponding to the (i-1)^{th} hop of to-be-probed node and the i^{th} hop of to-be-measured link, where i is an integer greater than or equal to 2.

For example, in the to-be-measured network shown in FIG. 5, if the support node is the node C and the first to-be-probed node is the node A, the first detection path generated by the probing device may be X-C-X, the second detection path may be X-C-A-C-X, and the first to-be-measured link may be C-A-C.

Step 204. Send a detection packet on each detection path of the two detection paths, and detect parameter information of each detection path.

The parameter information of each detection path may include parameter information such as a packet loss rate, a delay, a disorder rate, or a jitter. When the probing device detects the parameter information of each detection path, the probing device may send a detection packet along each detection path, and detect sending parameters and receiving parameters of these detection packets when sending the detection packets, so as to determine the parameter information of each detection path according to the sending parameters and the receiving parameters.

Specifically, the first detection path is used as an example. If the parameter information includes the packet loss rate, the probing device may detect a quantity M of sent detection packets at the same time when sending the detection packets, and detect a quantity N of received detection packets when the detection packets return to the probing device along the first detection path. Therefore, the probing device may determine, according to the quantities M and N, that a packet loss rate on the first detection path is (M-N)/M.

If the parameter information includes the delay, and the probing device detects that a detection packet sending time is T1 and a detection packet receiving time is T2, the probing device may determine, according to the sending time T1 and the receiving time T2, that a delay on the first detection path is T2-T1.

If the parameter information includes the disorder rate, the probing device may send M detection packets according to a specified packet sequence during detection packet sending; and when receiving the detection packets, may determine, according to a packet sequence of the received detection packets and the packet sequence during sending, that a quantity of detection packets whose packet sequences are changed is L. Therefore, it can be determined that a disorder rate on the first detection path is L/M.

If the parameter information includes the jitter, the probing device may determine, after determining a delay of each detection packet and according to the delay of each detection packet and the packet sequence during detection packet sending, a jitter on the first detection path.

For example, in the to-be-measured network shown in FIG. 5, the first detection path is X-C-X. The probing device may obtain parameter information such as a packet loss rate, a delay, a disorder rate, or a jitter on the first detection path X-C-X by means of detection by using the foregoing method.

Further, the detection packet of each detection path of the two detection paths includes path information of the detection path.

The path information is used to indicate a transmission path of a detection packet. For example, path information of the first detection path is used to indicate a transmission path of a detection packet of the first detection path. Optionally, path information of a detection path may include node identifiers of all nodes included in the detection path. The node identifier may be an SR (segment routing, segment routing) label of a node.

Optionally, the detection packet of each detection path may be a corresponding detection packet that is generated for each detection path by the probing device after the probing device generates the detection path. The first detection path is used as an example. When the probing device generates a detection packet of the first detection path, the probing device may encapsulate path information of the first detection path in a packet, so as to obtain a detection packet of the first detection path. The detection packet of the first detection path may include one or more detection packets.

Further, when the probing device detects, according to step 204, parameter information of the first detection path, the probing device may send the detection packet of the first detection path to a node connected to the probing device. After receiving the detection packet of the first detection path, the node may send the detection packet to a next node according to the encapsulated path information, and so on, so that the detection packet of the first detection path is finally returned to the probing device. Optionally, when each node on the first detection path receives the detection packet, each node may decapsulate the detection packet, and delete a node identifier of the node from the path information, for example, delete an SR label of the node.

In this embodiment of this application, the probing device may add path information of each detection path to a detection packet of the detection path. Therefore, each node in the to-be-measured network does not need to locally store the path information of each detection path, thereby saving a storage capacity of each node.

Step 205. Determine, according to parameter information of the first detection path and parameter information of the second detection path, link performance of the first to-be-measured link included in the to-be-measured network.

The two detection paths include the first detection path and the second detection path. When the probing device obtains, by means of detection, the parameter information of the first detection path and the parameter information of the second detection path, the probing device may determine the link performance of the first to-be-measured link according to corresponding parameter information in the parameter information of the first detection path and in the parameter information of the second detection path.

For example, in the to-be-measured network shown in FIG. 5, if the first detection path is X-C-X, the packet loss rate in the parameter information of the first detection path is a1, the second detection path is X-C-A-C-X, and a packet loss rate in the parameter information of the second detection path is a2, a packet loss rate of the first to-be-measured link C-A-C is a2-a1. Optionally, if a packet loss rate of a link C-A or A-C needs to be measured, (a2-a1)/2 may be determined as the packet loss rate of the link C-A or A-C. Similar to the packet loss rate, parameter information such as a delay, a disorder rate, and a jitter of the first to-be-measured link may all be determined according to the corresponding parameter information in the parameter information of the first detection path and in the parameter information of the second detection path. Details are not described in this embodiment of this application.

In the network performance measurement method provided in this embodiment of this application, after determining the support node and the first to-be-probed node, the probing device may generate the two detection paths according to the support node and the first to-be-probed node, and detect the path information of each detection path of the two detection paths; and then determine the link performance of the first to-be-measured link according to the parameter information of the first detection path and the parameter information of the second detection path. Therefore, each to-be-measured link included in the to-be-measured network can be traversed to perform performance detection, thereby reducing difficulty of network performance detection and improving detection efficiency.

Further, if the to-be-measured network includes multiple to-be-probed nodes, and quantities of hops from the multiple to-be-probed nodes to the probing device are different, the probing device may successively detect, according to an ascending order of the quantities of hops, link performance of each to-be-measured link included in the to-be-measured network.

Optionally, when the probing device detects, according to the ascending order of the quantities of hops, the link performance of each to-be-measured link included in the to-be-measured network, if there are multiple to-be-measured links that have a same quantity of hops, the probing device may perform detection in a synchronous manner or in an asynchronous manner. Specifically, the probing device may measure link performance of the multiple to-be-measured links at the same time, or may measure link performance of the multiple to-be-measured links one by one. When detection is performed in the asynchronous manner, detection may be performed randomly, or may be performed according to a preset sequence. This is not limited in this embodiment of this application.

For example, in the to-be-measured network shown in FIG. 5, quantities of hops from the node A, the node D, and the node F to the probing device are the same. Therefore, when the probing device detects three to-be-measured links C-A-C, C-D-C, and C-F-C, the probing device may detect the three links at the same time, or may detect the to-be-measured links C-A-C, C-D-C, and C-F-C one by one according to a sequence.

Specifically, after the determining, by the probing device according to parameter information of the first detection path and parameter information of the second detection path, link performance of the first to-be-measured link included in the to-be-measured network, the method further includes: selecting, by the probing device, a second to-be-probed node from at least one adjacent node of the first to-be-probed node, and generating a third detection path according to the second to-be-probed node. The third detection path includes the second detection path and a second to-be-measured link. The second to-be-measured link is a link between the first to-be-probed node and the second to-be-probed node. A quantity of hops from the second to-be-probed node to the probing device is greater than or equal to a quantity of hops from the first to-be-probed node to the probing device.

After generating the third detection path, the probing device may further send a detection packet on the third detection path, and detect parameter information of the third detection path. After that, the probing device may determine link performance of the second to-be-measured link according to the parameter information of the second detection path and the parameter information of the third detection path.

It should be noted that a process in which the probing device sends the detection packet on the third detection path and detects the parameter information of the third detection path is the same as a process in which the probing device sends the detection packet on each detection path of the two detection paths, and detects the parameter information of each detection path in step 204. For details, refer to a description in step 204, and details are not described again in this embodiment of this application.

For example, in the to-be-measured network shown in FIG. 5, if the first to-be-probed node is the node A, the second to-be-probed node selected by the probing device from adjacent nodes of the node A is a node B, and the third detection path generated according to the node B is X-C-A-B-A-C-X. The second to-be-measured link is a link between the node A and the node B. If the packet loss rate in the parameter information of the second detection path X-C-A-C-X is a2, and the probing device detects that a packet loss rate in parameter information of the third detection path X-C-A-B-A-C-X is a3, a packet loss rate of the second to-be-measured link A-B-A is a3―a2.

Optionally, when the probing device generates all detection paths included in the to-be-measured network, the probing device may not only gradually generate, according to the foregoing method, the detection paths included in the to-be-measured network, but also generate, at one time, all the detection paths included in the to-be-measured network, and gradually select a detection path from all the paths to perform network performance measurement. The to-be-measured network shown in FIG. 5 is used as an example. The probing device may generate all detection paths included in the to-be-measured network, that is, X-C-X, X-C-A-C-X, X-C-D-C-X, X-C-F-C-X, X-C-A-B-A-C-X, X-C-D-B-D-C-X, X-C-D-G-D-C-X, X-C-F-G-E-G-F-C-X, and X-C-A-B-E-B-A-C-X.

In this embodiment of this application, the probing device detects the to-be-measured network according to an ascending order of quantities of hops from to-be-probed nodes to the probing device. Therefore, for each to-be-measured link, the probing device may detect parameter information of only one detection path, and determine link performance of the to-be-measured link with reference to parameter information that is previously obtained by means of detection and that is of a previous-hop detection path. This reduces a quantity of detections, and further improves network performance detection efficiency.

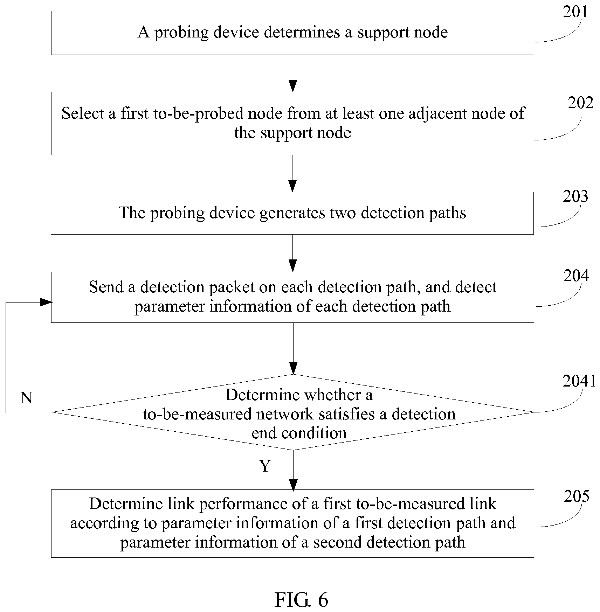

Further, referring to FIG. 6, before step 205, the method further includes step 2041.

Step 2041. The probing device determines whether the to-be-measured network satisfies a detection end condition. The detection end condition is one of the following: Each to-be-measured link in the to-be-measured network has been detected, a detection time of the to-be-measured network satisfies a preset time, or a quantity of detections on each to-be-measured link included in the to-be-measured network satisfies a preset quantity.

The preset time and the preset quantity may be set in advance. The preset time and the preset quantity may be fixed values, or may be set according to a structure and a size of the to-be-measured network or a network performance measurement requirement. This is not limited in this embodiment of this application.

Correspondingly, in step 205, the determining, by the probing device according to parameter information of the first detection path and parameter information of the second detection path, link performance of the first to-be-measured link included in the to-be-measured network includes: if determining that the detection end condition is satisfied, determining, according to the parameter information of the first detection path and the parameter information of the second detection path, the link performance of the first to-be-measured link included in the to-be-measured network.

When the probing device determines that the to-be-measured network satisfies the detection end condition, the parameter information that is of each detection path and that is obtained by the probing device by means of detection may include multiple detection values. The first detection path is used as an example. The probing device may use a maximum detection value, a minimum detection value, a latest detection value, or an average value of multiple detection values in multiple pieces of parameter information of the first detection path as the parameter information of the first detection path.

For example, an example in which the parameter information of the first detection path and the parameter information of the second detection path each include multiple detection values is used. If the probing device performs three detections on the first detection path and the second detection path separately, it may be obtained that three packet loss rates of the first detection path are b1, b2, and b3, and that three packet loss rates of the second detection path are c1, c2, and c3. The probing device may use an average value (b1+b2+b3)/3 of b1, b2, and b3 as the packet loss rate of the first detection path and an average value (c1+c2+c3)/3 of c1, c2, and c3 as the packet loss rate of the second detection path.

In this implementation of this application, when determining that the to-be-measured network satisfies the preset ending condition, the probing device may determine, according to the parameter information of the first detection path and the parameter information of the second detection path, the link performance of the first to-be-measured link included in the to-be-measured network. This can improve accuracy of network performance measurement.

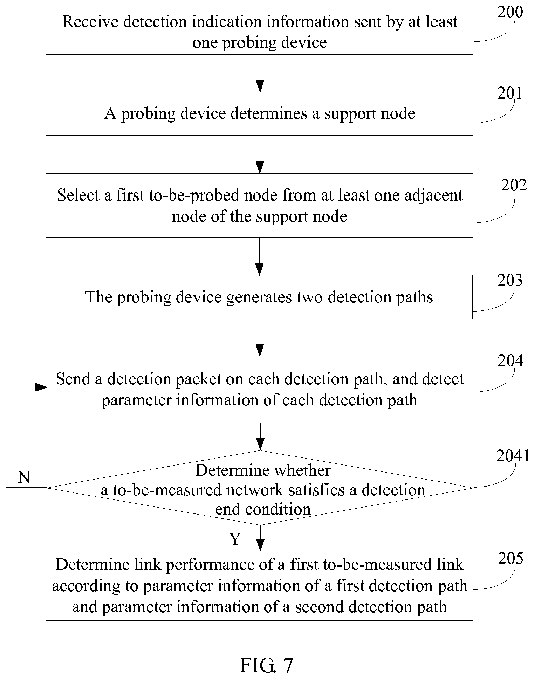

Further, referring to FIG. 7, before step 201, the method further includes step 200.

Step 200. Receive detection indication information sent by at least one probing device. The detection indication information is used to instruct the probing device to detect network performance of the to-be-measured network according to the support node. The at least one probing device is a probing device, other than the probing device, in at least two probing devices.

When the at least two probing devices detect the to-be-measured network, a probing device in the at least two probing devices may start to detect the network performance of the to-be-measured network when receiving the detection indication information sent by the at least one probing device.

Optionally, before detecting the to-be-measured network, the probing device may send a detection request to each probing device, other than the probing device, of the at least two probing devices. The detection request is used to request to detect the to-be-measured network according to the support node. When another probing device receives the detection request, the another probing device may send the detection indication information to the probing device if the another probing device agrees to detect the to-be-measured network according to the support node. When the probing device receives the detection indication information sent by the at least one probing device, the probing device may detect link performance of the to-be-measured network according to the method described in the foregoing embodiment. Preferably, a quantity of the at least one probing devices is greater than or equal to half of a quantity of the at least two probing devices.

Further, if the probing device does not receive the detection indication information, the probing device may send, to at least one probing device, a detection request in which another to-be-probed node is used as the support node, or the probing device may resend, to at least one probing device after a preset time, the detection request in which the to-be-probed node is used as the support node.

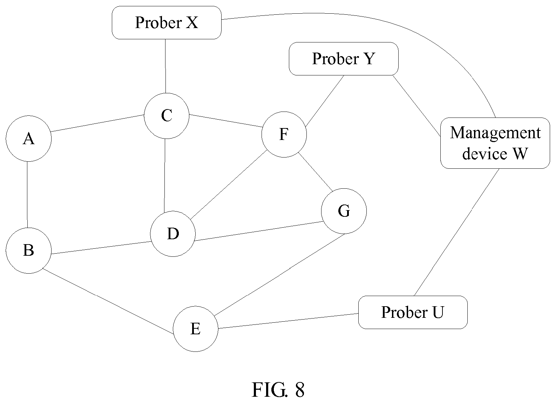

For example, as shown in FIG. 8, when the at least two probing devices include a probing device X, a probing device Y, and a probing device U, the probing device X may send a detection request to the probing device Y and the probing device U. At least one of the probing device Y or the probing device U sends detection indication information to the probing device X. When the probing device X receives the detection indication information, the probing device X may measure the network performance of the to-be-measured network according to the method described in the foregoing embodiment.

Further, when the at least two probing devices exist, each of the at least two probing devices may separately detect each to-be-measured link in the to-be-measured network according to the method described in the foregoing embodiment. After detecting a to-be-measured link, each probing device may send a detection value of link performance of the to-be-measured link to another probing device. For link performance of a to-be-measured link, each probing device may use a latest obtained detection value, a detection value that occurs most frequently, or an average value of multiple detection values as the link performance of the link. This is not limited in this embodiment of this application.

Alternatively, after detecting a to-be-measured link, each of the at least two probing devices may send a detection value of link performance of the to-be-measured link to a management device. The management device processes multiple received detection values of the to-be-measured link, to obtain the link performance of the to-be-measured link. When processing the multiple detection values of the to-be-measured link, the management device may use a latest received detection value of the to-be-measured link, a detection value that occurs most frequently, or an average value of the multiple detection values as the link performance of the link. Then, the management device sends the finally determined link performance of the link to each of the at least two probing devices.

For example, as shown in FIG. 8, the probing device X, the probing device Y, and the probing device U may separately detect each to-be-measured link in the to-be-measured network, and send a detection value, obtained by means of detection, of link performance to a management device W. The management device W determines the link performance of each to-be-measured link, and then separately sends the determined link performance to the probing device X, the probing device Y, and the probing device U.

In this implementation of this application, when the at least two probing devices exist, the probing device may detect the to-be-measured network when receiving the detection indication information sent by the at least one probing device, so as to measure the network performance of the to-be-measured network in a targeted manner. Further, when the at least two probing devices measure the network performance of the to-be-measured network, both measurement efficiency of the to-be-measured network and accuracy of network performance measurement can be improved.

The foregoing mainly describes, in terms of interaction between various network elements, the solutions provided in the embodiments of this application. It may be understood that, to implement the foregoing functions, the network elements such as the probing device and the to-be-probed node include corresponding hardware structures and/or software modules for performing the functions. Persons skilled in the art should be easily aware that, in combination with the examples described in the embodiments disclosed in this specification, network elements and algorithm steps can be implemented by means of hardware or a combination of hardware and computer software in this application. Whether a function is performed by hardware or by computer software driving hardware depends on particular applications and design constraint conditions of the technical solutions. Persons skilled in the art may use different methods to implement the described functions for each particular application, but it should not be considered that the implementation goes beyond the scope of this application.

In the embodiments of this application, the probing device may be divided into functional modules according to the foregoing method example. For example, various functional modules are divided according to various functions, or two or more functions are integrated into one processing module. The integrated module may be implemented in a form of hardware, or may be implemented in a form of a software functional module. It should be noted that, in the embodiments of this application, module division is schematic, and is merely logical function division. In an actual implementation, another division manner may be used.

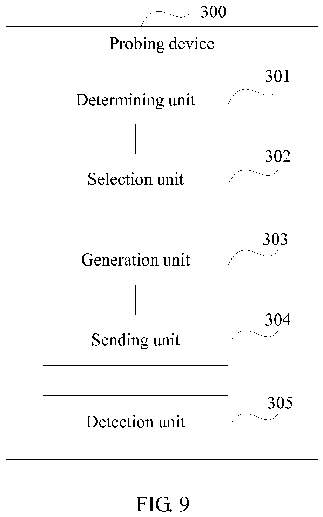

Provided that various functional modules are divided according to various functions, FIG. 9 shows a possible schematic structural diagram of a probing device related to the foregoing embodiment. The probing device 300 includes: a determining unit 301, a selection unit 302, a generation unit 303, a sending unit 304, and a detection unit 305. The determining unit 301 is configured to perform step 201 and step 205 in FIG. 4, FIG. 6, or FIG. 7. The selection unit 302 is configured to perform step 202 in FIG. 4, FIG. 6, or FIG. 7. The generation unit 303 is configured to perform step 203 in FIG. 4, FIG. 6, or FIG. 7. The sending unit 304 and the detection unit 305 are configured to perform step 204 in FIG. 4, FIG. 6, or FIG. 7. Further, the probing device 300 may further include a judging unit 306, and/or a receiving unit 307. The judging unit 306 is configured to perform step 2041 in FIG. 6 or FIG. 7. The receiving unit 307 is configured to perform step 200 in FIG. 7. All related content of various steps related to the foregoing method embodiment may be cited in function descriptions of corresponding functional modules. Details are not described herein again.

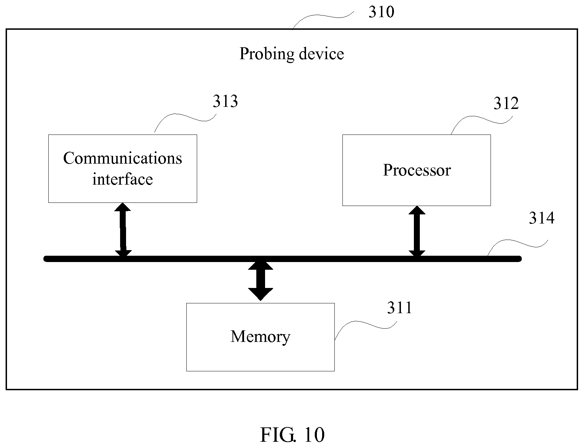

Provided that an integrated unit is used, FIG. 10 shows a schematic diagram of a possible logical structure of a probing device 310 related to the foregoing embodiment. The probing device 310 includes: a memory 311, a processor 312, a communications interface 313, and a bus 314. The memory 311, the processor 312, and the communications interface 313 are connected to each other by using the bus 314. The processor 312 is configured to control and manage an action of the probing device, for example, the processor 312 is configured to perform step 201 to step 205 in FIG. 4, FIG. 6, or FIG. 7, and step 2041 in FIG. 6; and/or configured to perform another process of the technology described in this specification. The communications interface 313 is configured to communicate with a to-be-probed node or another probing device. The memory 311 is configured to store program code and data that are of the probing device.

The processor 312 may be a central processing unit, a general-purpose processor, a digital signal processor, an application-specific integrated circuit, a field-programmable gate array or any other programmable logic device, a transistor logic device, a hardware component, or any combination thereof. The processor 312 may be a logical square box, a module, and a circuit that implement or execute various examples described with reference to the content disclosed in this application. The processor may also be a combination implementing a computing function, for example, a combination including one or more microprocessors, or a combination of a digital signal processor and a microprocessor. The bus 314 may be a Peripheral Component Interconnect (peripheral component interconnect, PCI for short) bus, an Extended Industry Standard Architecture (extended industry standard architecture, EISA) bus, or the like. The bus may be classified into an address bus, a data bus, a control bus, and the like. For ease of description, the bus is represented by using only one bold line in FIG. 10. However, this does not mean that there is only one bus or one type of bus.

In this implementation of this application, after determining a support node and a first to-be-probed node, the probing device may generate two detection paths according to the support node and the first to-be-probed node, and detect path information of each detection path of the two detection paths; and determine link performance of a first to-be-measured link according to parameter information of a first detection path and parameter information of a second detection path. Therefore, by means of traversal, performance detection can be performed on each to-be-measured link included in a to-be-measured network, thereby reducing difficulty of network performance detection and improving detection efficiency.

An embodiment of this application further provides a computer-readable storage medium. The computer-readable storage medium stores a computer-executable instruction. When at least one processor of a device executes the computer-executable instruction, the device executes the network performance measurement method provided in the embodiment shown in any one of FIG. 4, FIG. 6, or FIG. 7.

An embodiment of this application further provides a computer program product. The computer program product includes a computer-executable instruction, and the computer-executable instruction is stored in a computer-readable storage medium. At least one processor of a device may read the computer-executable instruction from the computer-readable storage medium, and the at least one processor executes the computer-executable instruction, so that the device executes the network performance measurement method provided in the embodiment shown in any one of FIG. 4, FIG. 6, or FIG. 7.

In this implementation of this application, after determining a support node and a first to-be-probed node, the device may generate two detection paths according to the support node and the first to-be-probed node, and detect path information of each detection path of the two detection paths; and determine link performance of a first to-be-measured link according to parameter information of a first detection path and parameter information of a second detection path. Therefore, by means of traversal, performance detection can be performed on each to-be-measured link included in a to-be-measured network, thereby reducing difficulty of network performance detection and improving detection efficiency.

## Claims

1. A network performance measurement method, wherein the method comprises:
determining (201), by a probing device, a support node, wherein the support node is a node in a to-be-measured network;
selecting (202) a first to-be-probed node from at least one adjacent node of the support node;
generating (203) two detection paths according to the support node and the first to-be-probed node, wherein the two detection paths comprise a first detection path and a second detection path, the first detection path comprises a path between the probing device and the support node, the second detection path comprises the first detection path and a first to-be-measured link, and the first to-be-measured link is a link between the support node and the first to-be-probed node;
sending (204) a detection packet on each detection path of the two detection paths, and detecting parameter information of each detection path, wherein the detection packet of each detection path of the two detection paths comprises path information of the detection path; and
determining (205), according to parameter information of the first detection path and parameter information of the second detection path, link performance of the first to-be-measured link comprised in the to-be-measured network;
wherein the to-be-measured network includes multiple to-be-probed nodes, and quantities of hops from the multiple to-be-probed nodes to the probing device are different, wherein the method further comprises:
successively detecting, by the probing device, according to an ascending order of the quantities of hops, link performance of each to-be-measured link included in the to-be-measured network.

2. The method according to claim 1, wherein a quantity of hops from the at least one adjacent node of the support node to the probing device is greater than or equal to a quantity of hops from the support node to the probing device.

3. The method according to claim 1 or 2, wherein after the determining (205), according to parameter information of the first detection path and parameter information of the second detection path, link performance of the first to-be-measured link comprised in the to-be-measured network, the method further comprises:
selecting a second to-be-probed node from at least one adjacent node of the first to-be-probed node, wherein a quantity of hops from the second to-be-probed node to the probing device is greater than or equal to a quantity of hops from the first to-be-probed node to the probing device;
generating a third detection path according to the first to-be-probed node and the second to-be-probed node, wherein the third detection path comprises the second detection path and a second to-be-measured link, and the second to-be-measured link is a link between the first to-be-probed node and the second to-be-probed node;
sending a detection packet on the third detection path, and detecting parameter information of the third detection path; and
determining link performance of the second to-be-measured link according to the parameter information of the second detection path and the parameter information of the third detection path.

4. The method according to any one of claims 1 to 3, wherein if at least two probing devices exist, before the determining (201), by a probing device, a support node, the method further comprises:
receiving (200) detection indication information sent by at least one probing device, wherein the detection indication information is used to instruct the probing device to detect network performance of the to-be-measured network according to the support node, and the at least one probing device is a probing device, other than the probing device, of the at least two probing devices.

5. The method according to claim 4, wherein after the determining, according to parameter information of the first detection path and parameter information of the second detection path, link performance of the first to-be-measured link comprised in the to-be-measured network, the method further comprises:
sending the link performance of the first to-be-measured link to another probing device, other than the probing device, of the at least two probing devices.

6. The method according to any one of claims 1 to 5, wherein before the determining (205), according to parameter information of the first detection path and parameter information of the second detection path, link performance of the first to-be-measured link comprised in the to-be-measured network, the method further comprises:
determining (2041) whether the to-be-measured network satisfies a detection end condition, wherein the detection end condition is one of the following: each to-be-measured link in the to-be-measured network has been detected, a detection time of the to-be-measured network satisfies a preset time, or a quantity of detections on each to-be-measured link comprised in the to-be-measured network satisfies a preset detection quantity; and
the determining (205), according to parameter information of the two detection paths, link performance of the first to-be-measured link comprised in the to-be-measured network comprises:
if determining that the detection end condition is satisfied, determining, according to the parameter information of the first detection path and the parameter information of the second detection path, the link performance of the first to-be-measured link comprised in the to-be-measured network.

7. A probing device (300), wherein the probing device comprises:
a determining unit (301), configured to determine a support node, wherein the support node is a node in a to-be-measured network;
a selection unit (302), configured to select a first to-be-probed node from at least one adjacent node of the support node;
a generation unit (303), configured to generate two detection paths according to the support node and the first to-be-probed node, wherein the two detection paths comprise a first detection path and a second detection path, the first detection path comprises a path between the probing device and the support node, the second detection path comprises the first detection path and a first to-be-measured link, and the first to-be-measured link is a link between the support node and the first to-be-probed node;
a sending unit (304), configured to send a detection packet on each detection path of the two detection paths, wherein the detection packet of each detection path of the two detection paths comprises path information of the detection path; and
a detection unit (305), configured to detect parameter information of each detection path, wherein
the determining unit (301) is further configured to determine, according to parameter information of the first detection path and parameter information of the second detection path, link performance of the first to-be-measured link comprised in the to-be-measured network;
wherein the to-be-measured network includes multiple to-be-probed nodes, and quantities of hops from the multiple to-be-probed nodes to the probing device are different, wherein the detection unit (305) is further configured to:
successively detect, according to an ascending order of the quantities of hops, link performance of each to-be-measured link included in the to-be-measured network.

8. The probing device (300) according to claim 7, wherein a quantity of hops from the at least one adjacent node of the support node to the probing device is greater than or equal to a quantity of hops from the support node to the probing device.

9. The probing device (300) according to claim 7 or 8, wherein:
the selection unit (302) is further configured to select a second to-be-probed node from at least one adjacent node of the first to-be-probed node, wherein a quantity of hops from the second to-be-probed node to the probing device is greater than or equal to a quantity of hops from the first to-be-probed node to the probing device;
the generation unit (303) is further configured to generate a third detection path according to the first to-be-probed node and the second to-be-probed node, wherein the third detection path comprises the second detection path and a second to-be-measured link, and the second to-be-measured link is a link between the first to-be-probed node and the second to-be-probed node;
the sending unit (304) is further configured to send a detection packet on the third detection path, and detect parameter information of the third detection path; and
the determining unit (301) is further configured to determine link performance of the second to-be-measured link according to the parameter information of the second detection path and the parameter information of the third detection path.

10. The probing device (300) according to any one of claims 7 to 9, wherein the probing device (300) further comprises:
a receiving unit, configured to receive detection indication information sent by at least one probing device, wherein the detection indication information is used to instruct the probing device to detect network performance of the to-be-measured network according to the support node, and the at least one probing device is a probing device, other than the probing device, of the at least two probing devices.

11. The probing device (300) according to claim 10, wherein the sending unit (304) is further configured to:
send the link performance of the first to-be-measured link to another probing device, other than the probing device, of the at least two probing devices.

12. The probing device (300) according to any one of claims 7 to 11, wherein the probing device (300) further comprises:
a judging unit, configured to determine whether the to-be-measured network satisfies a detection end condition, wherein the detection end condition is one of the following: each to-be-measured link in the to-be-measured network has been detected, a detection time of the to-be-measured network satisfies a preset time, or a quantity of detections on each to-be-measured link in the to-be-measured network satisfies a preset detection quantity; and
the determining unit (301) is specifically configured to:
if it is determined that the detection end condition is satisfied, determine, according to the parameter information of the first detection path and the parameter information of the second detection path, the link performance of the first to-be-measured link comprised in the to-be-measured network.

## Patentansprüche

1. Netzleistungsfähigkeitsmessverfahren, wobei das Verfahren Folgendes umfasst:
Bestimmen (201), durch eine Untersuchungsvorrichtung, eines Hilfsknotens, wobei der Hilfsknoten ein Knoten in einem zu messenden Netz ist;
Auswählen (202) eines ersten zu untersuchenden Knotens aus wenigstens einem angrenzenden Knoten des Hilfsknotens;
Erzeugen (203) von zwei Detektionspfaden gemäß dem Hilfsknoten und dem ersten zu untersuchenden Knoten, wobei die zwei Detektionspfade einen ersten Detektionspfad und einen zweiten Detektionspfad umfassen, der erste Detektionspfad einen Pfad zwischen der Untersuchungsvorrichtung und dem Hilfsknoten umfasst, der zweite Detektionspfad den ersten Detektionspfad und einen ersten zu messenden "Link" umfasst und der erste zu messende "Link" ein "Link" zwischen dem Hilfsknoten und dem zu messenden Knoten ist;
Senden (204) eines Detektionspakets auf jedem Detektionspfad der zwei Detektionspfade und Detektieren von Parameterinformationen jedes Detektionspfades, wobei das Detektionspaket jedes Detektionspfades der zwei Detektionspfade Pfadinformationen des Detektionspfades umfasst; und
Bestimmen (205), gemäß Parameterinformationen des ersten Detektionspfades und Parameterinformationen des zweiten Detektionspfades, einer "Link"-Leistungsfähigkeit des ersten zu messenden "Links", der in dem zu messenden Netz enthalten ist;
wobei das zu messende Netz mehrere zu untersuchende Knoten beinhaltet und Anzahlen an Sprüngen von den mehreren zu untersuchenden Knoten zu der Untersuchungsvorrichtung unterschiedlich sind, wobei das Verfahren ferner Folgendes umfasst:
sukzessives Detektieren, durch die Untersuchungsvorrichtung, gemäß einer aufsteigenden Reihenfolge der Anzahl an Sprüngen, einer "Link"-Leistungsfähigkeit jedes zu messenden "Links", der in dem zu messenden Netz enthalten ist.

2. Verfahren nach Anspruch 1, wobei eine Anzahl an Sprüngen von dem wenigstens einen angrenzenden Knoten des Hilfsknotens zu der Untersuchungsvorrichtung größer oder gleich einer Anzahl an Sprüngen von dem Hilfsknoten zu der Untersuchungsvorrichtung ist.

3. Verfahren nach Anspruch 1 oder 2, wobei das Verfahren nach dem Bestimmen (205), gemäß Parameterinformationen des ersten Detektionspfades und Parameterinformationen des zweiten Detektionspfades, einer "Link"-Leistungsfähigkeit des ersten zu messenden "Links", der in dem zu messenden Netz enthalten ist, ferner Folgendes umfasst:
Auswählen eines zweiten zu untersuchenden Knotens aus dem wenigstens einen angrenzenden Knoten des ersten zu untersuchenden Knotens, wobei eine Anzahl an Sprüngen von dem zweiten zu untersuchenden Knoten zu der Untersuchungsvorrichtung größer oder gleich einer Anzahl an Sprüngen von dem ersten zu untersuchenden Knoten zu der Untersuchungsvorrichtung ist;
Erzeugen eines dritten Detektionspfades gemäß dem ersten zu untersuchenden Knoten und dem zweiten zu untersuchenden Knoten, wobei der dritte Detektionspfad den zweiten Detektionspfad und einen zweiten zu messenden "Link" umfasst und der zweite zu messende "Link" ein "Link" zwischen dem ersten zu untersuchenden Knoten und dem zweiten zu untersuchenden Knoten ist;
Senden eines Detektionspakets auf dem dritten Detektionspfad und Detektieren von Parameterinformationen des dritten Detektionspfades; und
Bestimmen einer "Link"-Leistungsfähigkeitdes zweiten zu messenden "Links" gemäß den Parameterinformationen des zweiten Detektionspfades und den Parameterinformationen des dritten Detektionspfades.

4. Verfahren nach einem der Ansprüche 1 bis 3, wobei, falls wenigstens zwei Untersuchungsvorrichtungen vorhanden sind, das Verfahren vor dem Bestimmen (201), durch eine Untersuchungsvorrichtung, eines Hilfsknotens ferner Folgendes umfasst:
Empfangen (200) von Detektionsindikationsinformationen, die durch wenigstens eine Untersuchungsvorrichtung gesendet werden, wobei die Detektionsindikationsinformationen verwendet werden, um die Untersuchungsvorrichtung zum Detektieren einer Netzleistungsfähigkeit des zu messenden Netzes gemäß dem Hilfsknoten anzuweisen, und die wenigstens eine Untersuchungsvorrichtung eine Untersuchungsvorrichtung ist, bei der es sich nicht um die Untersuchungsvorrichtung der wenigstens zwei Untersuchungsvorrichtungen handelt.

5. Verfahren nach Anspruch 4, wobei das Verfahren nach dem Bestimmen, gemäß Parameterinformationen des ersten Detektionspfades und Parameterinformationen des zweiten Detektionspfades, einer "Link"-Leistungsfähigkeitdes ersten zu messenden "Links", der in dem zu messenden Netz enthalten ist, ferner Folgendes umfasst:
Senden der "Link"-Leistungsfähigkeitdes ersten zu messenden "Links"an die andere Untersuchungsvorrichtung, bei der es sich nicht um die Untersuchungsvorrichtung der wenigstens zwei Untersuchungsvorrichtungen handelt.

6. Verfahren nach einem der Ansprüche 1 bis 5, wobei das Verfahren vor dem Bestimmen (205), gemäß Parameterinformationen des ersten Detektionspfades und Parameterinformationen des zweiten Detektionspfades, einer "Link"-Leistungsfähigkeit des ersten zu messenden "Links", der in dem zu messenden Netz enthalten ist, ferner Folgendes umfasst:
Bestimmen (2041), ob das zu messende Netz eine Detektionsendbedingung erfüllt, wobei die Detektionsendbedingung eine der Folgenden ist: jeder zu messende "Link" in dem zu messenden Netz wurde detektiert, eine Detektionszeit des zu messenden Netzes erfüllt eine voreingestellte Zeit, oder eine Anzahl an Detektionen an jedem zu messenden "Link", der in dem zu messenden Netz enthalten ist, erfüllt eine voreingestellte Detektionsanzahl; und
wobei das Bestimmen (205), gemäß Parameterinformationen der zwei Detektionspfade, einer "Link"-Leistungsfähigkeitdes ersten zu messenden "Links", der in dem zu messenden Netz enthalten ist, Folgendes umfasst:
falls bestimmt wird, dass die Detektionsendbedingung erfüllt ist, Bestimmen, gemäß den Parameterinformationen des ersten Detektionspfades und den Parameterinformationen des zweiten Detektionspfades, der "Link"-Leistungsfähigkeit des ersten zu messenden "Links", der in dem zu messenden Netz enthalten ist.

7. Untersuchungsvorrichtung (300), wobei die Untersuchungsvorrichtung Folgendes umfasst:
eine Bestimmungseinheit (301), die zum Bestimmen eines Hilfsknotens konfiguriert ist, wobei der Hilfsknoten ein Knoten in einem zu messenden Netz ist;
eine Auswahleinheit (302), die zum Auswählen eines ersten zu untersuchenden Knotens aus wenigstens einem angrenzenden Knoten des Hilfsknotens konfiguriert ist;
eine Erzeugungseinheit (303), die zum Erzeugen von zwei Detektionspfaden gemäß dem Hilfsknoten und dem ersten zu untersuchenden Knoten konfiguriert ist, wobei die zwei Detektionspfade einen ersten Detektionspfad und einen zweiten Detektionspfad umfassen, der erste Detektionspfad einen Pfad zwischen der Untersuchungsvorrichtung und dem Hilfsknoten umfasst, der zweite Detektionspfad den ersten Detektionspfad und einen ersten zu messenden "Link" umfasst und der erste zu messende "Link" ein "Link" zwischen dem Hilfsknoten und dem zu messenden Knoten ist;
eine Sendeeinheit (304), die zum Senden eines Detektionspakets auf jedem Detektionspfad der zwei Detektionspfade konfiguriert ist, wobei das Detektionspaket jedes Detektionspfades der zwei Detektionspfade Pfadinformationen des Detektionspfades umfasst; und
eine Detektionseinheit (305), die zum und Detektieren von Parameterinformationen jedes Detektionspfades konfiguriert ist, wobei
die Bestimmungseinheit (301) ferner zum Bestimmen, gemäß Parameterinformationen des ersten Detektionspfades und Parameterinformationen des zweiten Detektionspfades, einer "Link"-Leistungsfähigkeitdes ersten zu messenden "Links"konfiguriert ist, der in dem zu messenden Netz enthalten ist;
wobei das zu messende Netz mehrere zu untersuchende Knoten beinhaltet und Anzahlen an Sprüngen von den mehreren zu untersuchenden Knoten zu der Untersuchungsvorrichtung unterschiedlich sind, wobei die Detektionseinheit (305) ferner zu Folgendem konfiguriert ist
sukzessives Detektieren, gemäß einer aufsteigenden Reihenfolge der Anzahl an Sprüngen, einer "Link"-Leistungsfähigkeitjedes zu messenden "Links", der in dem zu messenden Netz enthalten ist.

8. Untersuchungsvorrichtung (300) nach Anspruch 7, wobei eine Anzahl an Sprüngen von dem wenigstens einen angrenzenden Knoten des Hilfsknotens zu der Untersuchungsvorrichtung größer oder gleich einer Anzahl an Sprüngen von dem Hilfsknoten zu der Untersuchungsvorrichtung ist.

9. Untersuchungsvorrichtung (300) nach Anspruch 7 oder 8, wobei:
die Auswahleinheit (302) ferner zum Auswählen eines zweiten zu untersuchenden Knotens aus dem wenigstens einen angrenzenden Knoten des ersten zu untersuchenden Knotens konfiguriert ist, wobei eine Anzahl an Sprüngen von dem zweiten zu untersuchenden Knoten zu der Untersuchungsvorrichtung größer oder gleich einer Anzahl an Sprüngen von dem ersten zu untersuchenden Knoten zu der Untersuchungsvorrichtung ist;
die Erzeugungseinheit (303) ferner zum Erzeugen eines dritten Detektionspfades gemäß dem ersten zu untersuchenden Knoten und dem zweiten zu untersuchenden Knoten konfiguriert ist, wobei der dritte Detektionspfad den zweiten Detektionspfad und einen zweiten zu messenden "Link" umfasst und der zweite zu messende "Link" ein "Link" zwischen dem ersten zu untersuchenden Knoten und dem zweiten zu untersuchenden Knoten ist;
die Sendeeinheit (304) ferner zum Senden eines Detektionspakets auf dem dritten Detektionspfad und Detektieren von Parameterinformationen des dritten Detektionspfades konfiguriert ist; und
die Bestimmungseinheit (301) ferner zum Bestimmen einer "Link"-Leistungsfähigkeit des zweiten zu messenden "Links" gemäß den Parameterinformationen des zweiten Detektionspfades und den Parameterinformationen des dritten Detektionspfades konfiguriert ist.

10. Untersuchungsvorrichtung (300) nach einem der Ansprüche 7 bis 9, wobei die Untersuchungsvorrichtung (300) ferner Folgendes umfasst:
eine Empfangseinheit, die zum Empfangen von Detektionsindikationsinformationen konfiguriert ist, die durch wenigstens eine Untersuchungsvorrichtung gesendet werden, wobei die Detektionsindikationsinformationen verwendet werden, um die Untersuchungsvorrichtung zum Detektieren einer Netzleistungsfähigkeit des zu messenden Netzes gemäß dem Hilfsknoten anzuweisen, und die wenigstens eine Untersuchungsvorrichtung eine Untersuchungsvorrichtung ist, bei der es sich nicht um die Untersuchungsvorrichtung der wenigstens zwei Untersuchungsvorrichtungen handelt.

11. Untersuchungsvorrichtung (300) nach Anspruch 10, wobei die Sendeeinheit (304) ferner zu Folgendem konfiguriert ist:
Senden der "Link"-Leistungsfähigkeitdes ersten zu messenden "Links" an eine andere Untersuchungsvorrichtung, bei der es sich nicht um die Untersuchungsvorrichtung der wenigstens zwei Untersuchungsvorrichtungen handelt.

12. Untersuchungsvorrichtung (300) nach einem der Ansprüche 7 bis 11, wobei die Untersuchungsvorrichtung (300) ferner Folgendes umfasst:
eine Beurteilungseinheit, die zum Bestimmen konfiguriert ist, ob das zu messende Netz eine Detektionsendbedingung erfüllt, wobei die Detektionsendbedingung eine der Folgenden ist: jeder zu messende "Link" in dem zu messenden Netz wurde detektiert, eine Detektionszeit des zu messenden Netzes erfüllt eine voreingestellte Zeit, oder eine Anzahl an Detektionen an jedem zu messenden "Link" in dem zu messenden Netz erfüllt eine voreingestellte Detektionsanzahl; und
wobei die Bestimmungseinheit (301) speziell zu Folgendem konfiguriert ist:
falls bestimmt wird, dass die Detektionsendbedingung erfüllt ist, Bestimmen, gemäß den Parameterinformationen des ersten Detektionspfades und den Parameterinformationen des zweiten Detektionspfades, der "Link"-Leistungsfähigkeit des ersten zu messenden "Links", der in dem zu messenden Netz enthalten ist.

## Revendications

1. Procédé de mesure de performances de réseau, le procédé comprenant :
la détermination (201), par un dispositif de sondage, d'un nœud de support, le nœud de support étant un nœud dans un réseau à mesurer ;
la sélection (202) d'un premier nœud à sonder à partir d'au moins un nœud adjacent du nœud de support ;
la génération (203) de deux trajets de détection en fonction du nœud de support et du premier nœud à sonder, les deux trajets de détection comprenant un premier trajet de détection et un deuxième trajet de détection, le premier trajet de détection comprenant un trajet entre le dispositif de sondage et le nœud de support, le deuxième trajet de détection comprenant le premier trajet de détection et une première liaison à mesurer, et la première liaison à mesurer étant une liaison entre le nœud de support et le premier nœud à sonder ;
l'envoi (204) d'un paquet de détection sur chaque trajet de détection des deux trajets de détection, et la détection d'informations de paramètres de chaque trajet de détection, le paquet de détection de chaque trajet de détection des deux trajets de détection comprenant des informations de trajet du trajet de détection ; et
la détermination (205), en fonction d'informations de paramètres du premier trajet de détection et d'informations de paramètres du deuxième trajet de détection, de performances de liaison de la première liaison à mesurer comprise dans le réseau à mesurer ;
dans lequel le réseau à mesurer comprend de multiples nœuds à sonder, et des quantités de sauts depuis les multiples nœuds à sonder vers le dispositif de sondage sont différentes, le procédé comprenant en outre :
la détection successive, par le dispositif de sondage, selon un ordre croissant des quantités de sauts, de performances de liaison de chaque liaison à mesurer incluse dans le réseau à mesurer.

2. Procédé selon la revendication 1, dans lequel une quantité de sauts depuis l'au moins un nœud adjacent du nœud de support vers le dispositif de sondage est supérieure ou égale à une quantité de sauts depuis le nœud de support vers le dispositif de sondage.

3. Procédé selon la revendication 1 ou 2, dans lequel, après la détermination (205), en fonction d'informations de paramètres du premier trajet de détection et d'informations de paramètres du deuxième trajet de détection, de performances de liaison de la première liaison à mesurer comprise dans le réseau à mesurer, le procédé comprend en outre :
la sélection d'un second nœud à sonder depuis au moins un nœud adjacent du premier nœud à sonder, une quantité de sauts depuis le second nœud à sonder vers le dispositif de sondage étant supérieure ou égale à une quantité de sauts depuis le premier nœud à sonder vers le dispositif de sondage ;
la génération d'un troisième trajet de détection en fonction du premier nœud à sonder et du second nœud à sonder, le troisième trajet de détection comprenant le deuxième trajet de détection et une seconde liaison à mesurer, et la seconde liaison à mesurer étant une liaison entre le premier nœud à sonder et le second nœud à sonder ;
l'envoi d'un paquet de détection sur le troisième trajet de détection, et la détection d'informations de paramètres du troisième trajet de détection ; et
la détermination de performances de liaison de la seconde liaison à mesurer en fonction des informations de paramètres du deuxième trajet de détection et des informations de paramètres du troisième trajet de détection.

4. Procédé selon l'une quelconque des revendications 1 à 3, dans lequel, si au moins deux dispositifs de sondage existent, avant la détermination (201), par un dispositif de sondage, d'un nœud de support, le procédé comprend en outre :
la réception (200) d'informations d'indication de détection envoyées par au moins un dispositif de sondage, les informations d'indication de détection étant utilisées pour donner l'instruction au dispositif de sondage de détecter des performances de réseau du réseau à mesurer en fonction du nœud de support, et l'au moins un dispositif de sondage étant un dispositif de sondage, autre que le dispositif de sondage, des au moins deux dispositifs de sondage.

5. Procédé selon la revendication 4, dans lequel, après la détermination, en fonction d'informations de paramètres du premier trajet de détection et d'informations de paramètres du deuxième trajet de détection, de performances de liaison de la première liaison à mesurer comprise dans le réseau à mesurer, le procédé comprend en outre : l'envoi des performances de liaison de la première liaison à mesurer à un autre dispositif de sondage, autre que le dispositif de sondage, des au moins deux dispositifs de sondage.

6. Procédé selon l'une quelconque des revendications 1 à 5, dans lequel, avant la détermination (205), en fonction d'informations de paramètres du premier trajet de détection et d'informations de paramètres du deuxième trajet de détection, de performances de liaison de la première liaison à mesurer comprise dans le réseau à mesurer, le procédé comprend en outre :
la détermination (2041) établissant si le réseau à mesurer satisfait à une condition de fin de détection, la condition de fin de détection étant un des éléments suivants : chaque liaison à mesurer dans le réseau à mesurer a été détectée, un temps de détection du réseau à mesurer satisfait à un temps prédéfini, ou une quantité de détections sur chaque liaison à mesurer comprise dans le réseau à mesurer satisfait à une quantité de détection prédéfinie ; et
la détermination (205), en fonction d'informations de paramètres des deux trajets de détection, de performances de liaison de la première liaison à mesurer comprise dans le réseau à mesurer comprend :
s'il est établi que la condition de fin de détection est satisfaite, la détermination, en fonction des informations de paramètres du premier trajet de détection et des informations de paramètres du deuxième trajet de détection, des performances de liaison de la première liaison à mesurer comprise dans le réseau à mesurer.

7. Dispositif de sondage (300), le dispositif de sondage comprenant :
une unité de détermination (301), configurée pour déterminer un nœud de support, le nœud de support étant un nœud dans un réseau à mesurer ;
une unité de sélection (302), configurée pour sélectionner un premier nœud à sonder à partir d'au moins un nœud adjacent du nœud de support ;
une unité de génération (303), configurée pour générer deux trajets de détection selon le nœud de support et le premier nœud à sonder, les deux trajets de détection comprenant un premier traj et de détection et un deuxième traj et de détection, le premier trajet de détection comprenant un trajet entre le dispositif de sondage et le nœud de support, le deuxième trajet de détection comprenant le premier trajet de détection et une première liaison à mesurer, et la première liaison à mesurer étant une liaison entre le nœud de support et le premier nœud à sonder ;
une unité d'envoi (304), configurée pour envoyer un paquet de détection sur chaque trajet de détection des deux trajets de détection, le paquet de détection de chaque trajet de détection des deux trajets de détection comprenant des informations de trajet du trajet de détection ; et
une unité de détection (305), configurée pour détecter des informations de paramètres de chaque trajet de détection,
dans lequel
l'unité de détermination (301) est en outre configurée pour déterminer, en fonction d'informations de paramètres du premier trajet de détection et d'informations de paramètres du deuxième trajet de détection, des performances de liaison de la première liaison à mesurer comprise dans le réseau à mesurer ;
dans lequel le réseau à mesurer comprend de multiples nœuds à sonder, et des quantités de sauts depuis les multiples nœuds à sonder vers le dispositif de sondage sont différentes, dans lequel l'unité de détection (305) est en outre configurée pour :
détecter successivement, selon un ordre croissant des quantités de sauts, des performances de liaison de chaque liaison à mesurer incluse dans le réseau à mesurer.

8. Dispositif de sondage (300) selon la revendication 7, dans lequel une quantité de sauts depuis l'au moins un nœud adjacent du nœud de support vers le dispositif de sondage est supérieure ou égale à une quantité de sauts depuis le nœud de support vers le dispositif de sondage.

9. Dispositif de sondage (300) selon la revendication 7 ou 8, dans lequel :
l'unité de sélection (302) est en outre configurée pour sélectionner un second nœud à sonder depuis au moins un nœud adjacent du premier nœud à sonder, dans lequel une quantité de sauts depuis le second nœud à sonder vers le dispositif de sondage est supérieure ou égale à une quantité de sauts depuis le premier nœud à sonder vers le dispositif de sondage ;
l'unité de génération (303) est en outre configurée pour générer un troisième trajet de détection en fonction du premier nœud à sonder et du second nœud à sonder, le troisième trajet de détection comprenant le deuxième trajet de détection et une seconde liaison à mesurer, et la seconde liaison à mesurer étant une liaison entre le premier nœud à sonder et le second nœud à sonder ;
l'unité d'envoi (304) est en outre configurée pour envoyer un paquet de détection sur le troisième trajet de détection, et pour détecter des informations de paramètres du troisième trajet de détection ; et
l'unité de détermination (301) est en outre configurée pour déterminer des performances de liaison de la seconde liaison à mesurer en fonction des informations de paramètres du deuxième trajet de détection et des informations de paramètres du troisième trajet de détection.

10. Dispositif de sondage (300) selon l'une quelconque des revendications 7 à 9, le dispositif de sondage (300) comprenant en outre :
une unité de réception, configurée pour recevoir des informations d'indication de détection envoyées par au moins un dispositif de sondage, les informations d'indication de détection étant utilisées pour donner l'instruction au dispositif de sondage de détecter des performances de réseau du réseau à mesurer en fonction du nœud de support, et l'au moins un dispositif de sondage étant un dispositif de sondage, autre que le dispositif de sondage, des au moins deux dispositifs de sondage.

11. Dispositif de sondage (300) selon la revendication 10, dans lequel l'unité d'envoi (304) est en outre configurée pour :
envoyer les performances de liaison de la première liaison à mesurer à un autre dispositif de sondage, autre que le dispositif de sondage, des au moins deux dispositifs de sondage.

12. Dispositif de sondage (300) selon l'une quelconque des revendications 7 à 11, le dispositif de sondage (300) comprenant en outre :
une unité d'évaluation, configurée pour déterminer si le réseau à mesurer satisfait à une condition de fin de détection, la condition de fin de détection étant un des éléments suivants : chaque liaison à mesurer dans le réseau à mesurer a été détectée, un temps de détection du réseau à mesurer satisfait à un temps prédéfini, ou une quantité de détections sur chaque liaison à mesurer dans le réseau à mesurer satisfait à une quantité de détection prédéfinie ; et
l'unité de détermination (301) est particulièrement configurée pour :
s'il est établi que la condition de fin de détection est satisfaite, déterminer, en fonction des informations de paramètres du premier trajet de détection et des informations de paramètres du deuxième trajet de détection, les performances de liaison de la première liaison à mesurer comprise dans le réseau à mesurer.
